(19) **Europäisches Patentamt**
**European Patent Office**
**Office européen des brevets**

(11) **EP 0 975 097 A2**

(12) **EUROPEAN PATENT APPLICATION**

(43) Date of publication:
26.01.2000 Bulletin 2000/04

(51) Int Cl.⁷: **H04B 3/54**, H04L 27/26,
H04L 5/02, H04L 5/14

(21) Application number: 99440200.6

(22) Date of filing: 16.07.1999

(84) Designated Contracting States:
**AT BE CH CY DE DK ES FI FR GB GR IE IT LI LU MC NL PT SE**
Designated Extension States:
**AL LT LV MK RO SI**

(30) Priority: 23.07.1998 IT MI981699

(71) Applicant: **ALCATEL**
75008 Paris (FR)

(72) Inventors:
• **Guidotti, Giovanni**
65122 Pescara (IT)
• **Leva, Angelo**
21040 Uboldo (Varese) (IT)

(74) Representative:
**Schmidt, Werner Karl, Dipl.-Phys. et al**
**Alcatel**
**Intellectual Property Department, Stuttgart**
**Postfach 30 09 29**
**70449 Stuttgart (DE)**

(54) **Method and device for bi-directional data exchange over low and medium voltage electric power lines**

(57)     The present invention relates to a method and device for exchanging, bidirectionally and at high bit rate, services, information and data between a service provider and a customer, over a communication system comprising a conventional low and medium voltage AC electric power network. The present invention is characterized by a signal modulation and transmission technique (COFDM technique) that, according to the state of the art, has been up to now utilized only for communication over radio channel or over subscriber loop and by a new access technique.

**Fig. 8**

**EP 0 975 097 A2**

**Description**

The present invention relates to the field of information and data bi-directional transmission. More particularly it concerns a method and device for the bi-directional high bit-rate exchange of services, information and data between a service provider and a customer, over a communication system comprising a conventional low (or medium) voltage AC electric power network.

The power lines generally serve for distributing electricity to buildings (dwelling houses, factories, etc.) but since some years they have been deemed also as means for exchanging different kind of electric signals. At first, the power line providers utilized the network to make the polling of the electricity meters from remote zones but afterwards they thought to use it for providing the customer with interactive services. In this connection, the results of NORWEB are known which, by means of conventional signal modulation techniques on a sole carrier, but conditioning the network, and on a very limited number of customers, ensures a data downloading rate of about 1 Mb/s per customer.

The power line is usually constituted by a generally unshielded pair or a set of three copper wires directly reaching the customer and which are connected for use through an electricity meter measuring the electric power consumed. The mentioned network "conditioning" for the realization of the NORWEB system contemplates the installation, at the house of all customers connected to the medium-to-low voltage step-down transformer, of the so-called conditioning units, i.e. low-pass filters and high-pass filters capable of separating the signal at the frequency of 50 Hz, provided for the power feeding, from the higher frequencies and lower power signal which is provided for the communication with the service provider, as well as, obviously, of suitable transmitters/receivers.

In essence, therefore, although the existing techniques allow the use of power lines for transmitting data and information, the downloading rate is too low for exchanging multimedial services and the like. Moreover, the number of transmitted bits per each customer and per time unit is a function of the number of customers connected to the same source and therefore feels the effects of the network structure.

Therefore, the main object of the present invention is providing a method of processing a digital signal to be transmitted over common power lines to allow a bi-directional exchange of big amounts of information at high bit-rate between a customer and the service provider or between several customers.

A further object of the present invention is therefore providing a device for the bi-directional exchange of data over low-voltage electrical power lines to allow a bi-directional exchange of big amounts of information at high bit-rate between customer and service provider or between several customers.

The above and further objects are brilliantly achieved by a method of transmitting digital signals from a central digital or digitized data source to a customer through the use of electric power lines as set forth in claim 1, a method of receiving digital signals transmitted to customer from a central digital or digitized data source through the use of electric power lines, as set forth in claim 2, a method of transmitting digital signals from a customer to a central unit through the use of electrical power lines according to claim 3, a method of receiving digital signals transmitted from a customer to a central unit through the use of electric power lines according to claim 4 and a device for transmitting/receiving over electric power lines as set forth in claims 9 and 10. Further advantageous features of the invention are set forth in the respective dependent claims.

A detailed description of the present invention is now given below merely by way of an exemplifying and non limiting example, which description should be read with reference to the attached figures, wherein:

- Fig. 1 illustrates, through a very schematic view, a generic low or medium voltage electric power distribution system;
- Fig. 2 still schematically illustrates a network for bi-directionally transmitting signals using electric power lines;
- Fig. 3 is a basic diagram of the OFDM signal generation:
- Fig. 4 is a functional main block diagram of the modulator;
- Fig. 5 schematically illustrates a typical diagram of a primary substation;

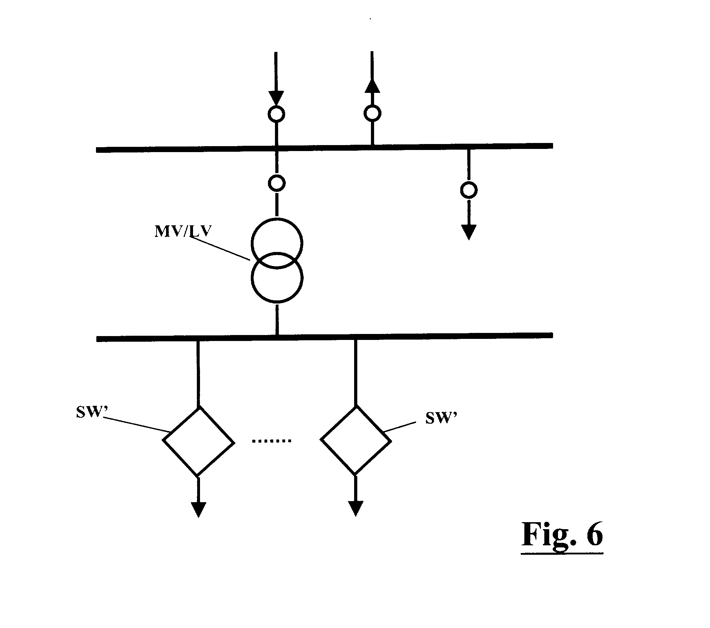

- Fig. 6 schematically illustrates a typical diagram of a secondary substation;
- Fig. 7 schematically illustrates a coupling device;
- Fig. 8 illustrates the access diagram in accordance with the techniques according to the present invention; and
- Fig. 9 shows a known conditioning unit.

Fig. 9 shows a known conditioning unit, CU. In essence, it comprises high-pass filters (HPF) or low-pass filters (LPF) capable of separating the power signal at the frequency of 50 Hz, intended for the power feeding, from the communication signal at higher frequencies and lower power, intended for the communication between the service provider and the customer.

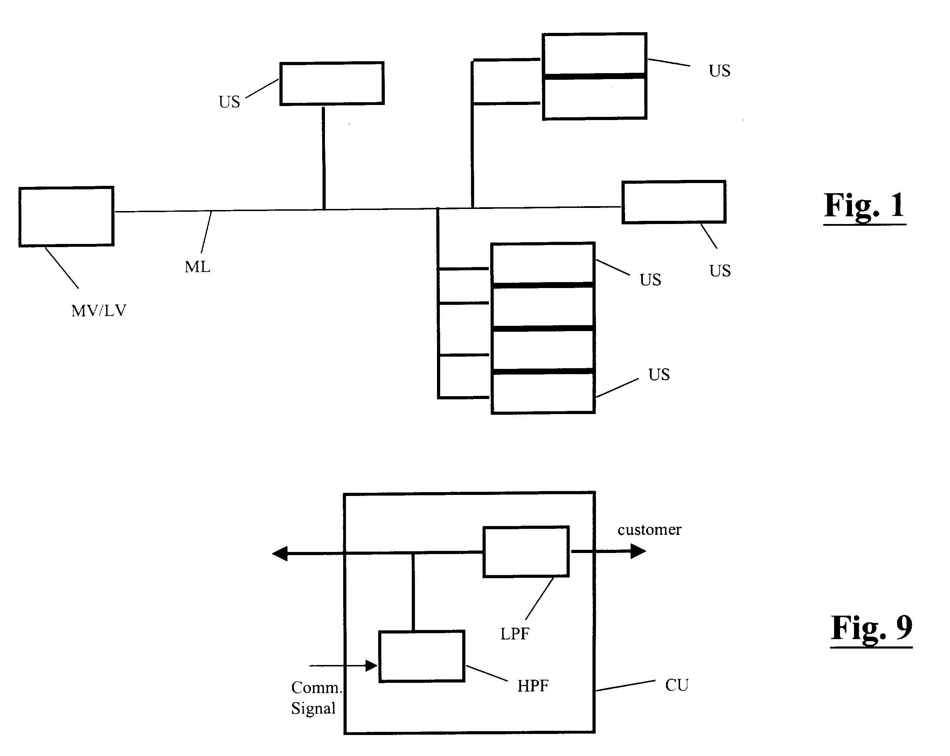

Fig. 1 illustrates the generalized diagram of a generic low-voltage electric power distribution system, but the same considerations are easily applicable to the medium-voltage distribution network. In such a figure there are: a step-down medium voltage to low voltage transformer (block labelled MV/LV) that separates the two distribution networks, the intermediate one of the service provider and the final one towards the customers; a power distribution main line ML which the various customers are connected to in parallel, also referred to as "distribution ridgeline"; and a plurality of parallel-connected customers, i.e. connected without any sectioning, to the distribution ridgeline and each being represented by a block labelled US.

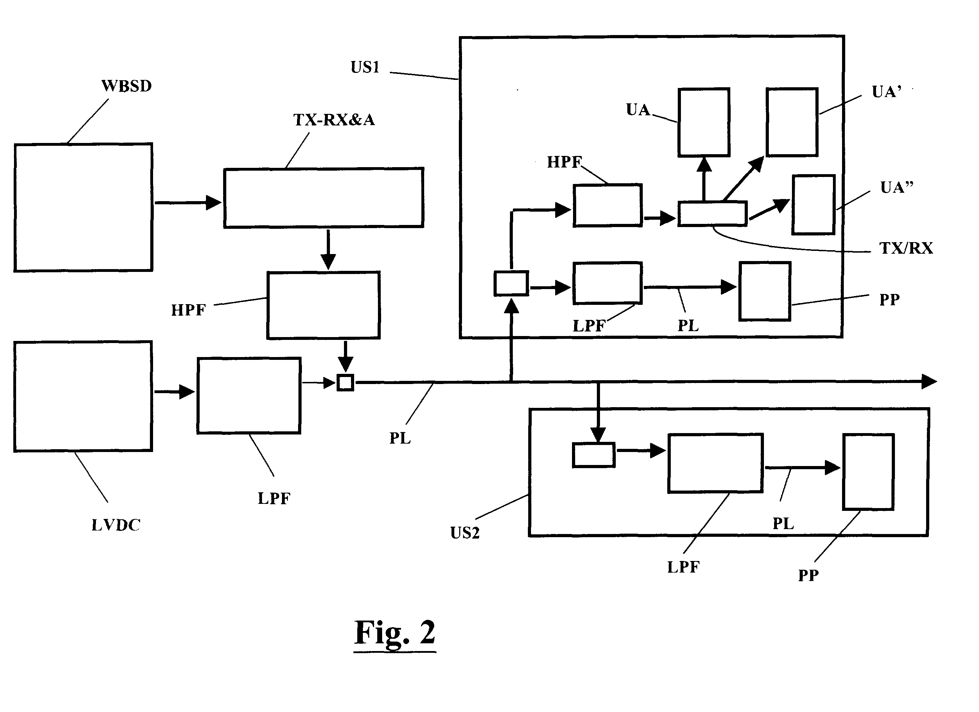

Several research works, easily available in the literature, demonstrate how the transmission parameters over these networks are greatly dependent on impedance mismatchings that occur randomly and in coincidence with electric load variations, i.e. on the number, type and connection location of the electrical appliances used by the customers (see, e.g., Masaoki Tanaka, "High frequency noise power spectrum, impedance and transmission loss of power line in Japan on intrabuilding power line communications", IEEE Transactions on Consumer Electronics, vol. 34, No. 2, May 1988). The first idea to limit these unpredictable and undesired effects was to replace the common metres of the customers by devices (multi-mode distributors) able to separate the distribution of services at the final use point as to obtain an isolation from disturbances in the customer's house and an impedance matching of a network with the other (provider network and customer network). This is diagrammatically shown in Fig. 2 where block WBSD designates a broadband service distributor, LVDC designates a low-voltage distribution substation, HPF is a high-pass filter, LPF is a low-pass filter, PL is a power line, UA is a customer apparatus (for instance a telephone instrument or a personal computer), TR&A is a transmitter-receiver & coupler block and PP designates a socket. The customer terminal is further comprised of a transmitter and/or receiver TX/RX for data exchange according to the OFDM technique and in the OFDMA access mode described hereinafter. A first "type" of customer is indicated at US1, a second "type" of customer that does not need to receive/transmit data and/or information being indicated at US2.

As it is known, the network at stake has several problems of signal transmission depending on whether it is analyzed in terms of noise power as a function of frequency, of input impedance at the service provision point (e.g. at the inlet of a residential apartment) or of transmission losses. Assuming to provide the service at the inlet of a given customer network (point of supply contract definition and therefore of installation of multi-mode distributor) and therefore to have solved the impedance mismatching problem, at least within a certain frequency range, the problem still exists as to how to eliminate the random noise phenomena which normally occur because of seasonal phenomena or in proximity of particularly critical sources like the industrial ones. From resources already carried out, see e.g. the above cited article, it is noticed that it is anyway possible to determine a statistical behaviour model of the phenomena: upper and lower limits can be detected for the noise power and the frequency range in which it occurs.

The noise typically occurring on the low-voltage power lines is composed of disturbances, both broadband of short length (dumped transients) and of long length (harmonics of 50 Hz or 100Hz and pulse signals with a repetition frequency lower than 10 kHz), and narrow-band (unmodulated and modulated carriers with related harmonics).

The basic inventive principle of the present invention, in order to overcome the problems of mismatching, distortion, impulse or spread noise, random and deterministic noise and delayed echoes in a broadband signal transmission, provides for the use of the coded orthogonal frequency division multiplexing technique (COFDM tecnique) for the coding, modulation and transport of the information signal over low-voltage or medium-voltage power lines. With this technique, the bit stream is partitioned over several carriers thus determining a robustness of the thus obtained system to disturbances present on the channel. In particular, different portions of the spectrum where the resulting signal could be placed can be chosen.

The COFDM technique, extensively described in the broadcasting or radio-mobile communication literature (see e.g. ETS 300 744 "Digital Video Broadcasting (DVB); Framing structure channel coding and modulation for digital terrestrial television (DVB-T)", ETSI, March 1997) is used in the present invention, although in a special and new application thereof with respect to hitherto known uses.

This technique consists in generating a set of partially overlapping and mutually orthogonal spectra, of the type sin(x)/(x) in the frequency domain, and correspondingly of rectangular pulses in the time domain. It is a multitone system that greatly benefits from the fact that the signal to be transmitted is generated by a Fourier transform which combines modulation, multiplexing and pulse shaping into a single operation. Each carrier is modulated according to a fixed conventional constellation selected from the xPSK or xQAM family (for instance QPSK, 16QAM, 64QAM, etc., according to the channel characteristics). The bit sequence coming into the OFDM modulator (i.e. the transmitter in this system) is segmented at each time interval $T_S$ into N $m$-bit blocks, with each of which being associated with a complex number $X_{i,k}$ representing a symbol of the fixed constellation. Once a bit stream has been mapped into a sequence of symbols, each symbol is associated with one of the subcarriers so that a vector of $2k + 1$ sequential symbols is made to correspond with a system of $2k + 1$ different carriers. The sum of the carriers constitutes the signal associated with the so-called OFDM symbol and qualitatively it can be written as:

$$x_i(t) = \Sigma_{k=-K..+K} X_{i,k} e^{j2\pi fkt} rect_{Ts}(t - iT_s)$$

The overall signal is given by the sum of the transmitted OFDM symbols, according to the following relation:

$$x(t) = \Sigma_{i=-\infty..+\infty}\Sigma_{k=-K..+K}X_{i,k}e^{j2\pi fkt}rect_{Ts}(t-iT_s)$$

In order to reduce the spectral occupation, it is necessary for the carriers to be orthogonal each other and therefore satisfy the following analytical condition:

$$\int e^{j2\pi fkt}e^{-j2\pi fht}dt=0 \text{ for } h\neq k$$

This implies that the carrier frequencies are chosen equal to integer multiples of the reciprocal of the OFDM symbol duration $T_s$:

$$f_k = f_0+k/T_s, \ k = -K..+K$$

$f_0$ being the center-carrier frequency.

The signal thus obtained is sampled with sampling interval $T=T_s/N$ where $N=2K+1$, N being the number of carriers. The signal $x(nt)$ thus obtained is therefore:

$$x(nt)=\Sigma_{i=-\infty..+\infty} \Sigma_{k=-K..+K}X_{i,k}e^{j2\pi kn/N}rect_{Ts}(nT_s/N-iT_s)$$

The digital-to-analogue conversion instead of these samples generates a continuos signal that will modulate a radio frequency carrier. The expression just examined is equivalent to an Inverse Discrete Fourier Transform (IDFT) of the complex coefficients $X_{i,k}$ except a factor $1/N$.

This suggests a way of implementing the OFDM modulation in practice: in transmission, one implements an IDFT of symbols $X_{i,k}$ and in reception one implements the inverse operation, i.e. a Direct Discrete Fourier Transform or DDFT.

Choosing then a vector of $N=2K+1$ complex symbols to be transmitted, N samples $x_n$ of the OFDM symbol will be transmitted with:

$$\{x_n\}=IDFT\{X_{-K}..X_{+K}\}$$

$$x_n=(1/N)\Sigma_{k=-K..+K} \ X_k e^{j2\pi kn/N}, \ n=0,1,...,N-1, \ N\geq2K+1$$

while in reception:

$$DFT\{x_n\}=\{X_{-K..+K}\}$$

Indeedt, because of the behaviour of the transmission channel, a guard time $T_g$ is obtained within the time $T_s$ which is the time available for transmitting the OFDM symbol so that the echoes or the signal reflections that in reception fall within this interval are utilized in a constructive manner to restore the main signal.

Therefore, we obtain

$$T_s=T_u+T_g$$

where $T_u$ is the useful portion of the transmitted signal, $T_g$ is the guard time and $T_s$ is the overall length of the transmitted OFDM symbol.

Calling P the number of transmitted OFDM symbols constituting a frame, one finds that the emitted OFDM signal has the following expression:

$$s(t)=Re\{e^{j2\pi fct}\Sigma_{m=0..+\infty} \ \Sigma_{l=0..+P-1} \ \Sigma_{k=K \ min..K \ max} \ c_{m,l,k}\Psi_{m,l,k}(t)\}$$

where

$$\psi_{m,l,k}(t)=e^{j2\pi(k'/T_u)(t-\Delta-l*T_s-P*m*T_s)}$$

for

$$(1+P*m)*T_s \leq t \leq (1+P*m+1)*T_s$$

$\psi_{m,l,k}(t)=0$     elsewhere

$k$ is the number of the current carrier
$l$ is the number of the current OFDM symbol in the frame
$m$ is the number of the current frame
$K$ is the number of the transmitted carriers
$T_s$ is the length of the OFDM symbol
$T_u$ is the reciprocal of the distance between two adjacent carriers
$A$ is the length of the guard interval
$f_c$ is the centre frequency of the RF signal
k' is the carrier index related to the frequency centre and defined as:

$$k'=k-(k_{max} + k_{min})/2$$

$c_{m,0,k}$ complex symbol for the carrier $k$ of OFDM symbol N° 1 in the frame N° m;
$c_{m,l,k}$ complex symbol for the carrier $k$ of the OFDM symbol N° 2 in the frame N° m;
...
$c_{m,P-1,k}$ complex symbol for the carrier $k$ of the OFDM symbol $P$-1 in the frame N° m.

The thus defined OFDM signal can use a part of the available carriers for transmitting the actual information data, a part for equalizing the channel (static carriers, i.e. carriers in a fixed position and at a proper level, and dynamic carriers, i.e. in a continuously varying position but known and with suitable level), a part for transmitting service information concerning e.g. the configuration of the transmitting apparatuses.

According to this technique, the primitive signal is therefore partitioned over several carriers hence determining the robustness of the system thus obtained against disturbances present in the channel.

Information lost on the disturbed carriers can be reconstructed from the encoding techniques and from the signal received over the other carriers, while should disturbances exist on the channel in a position known and constant with time, it is possible to "turn off" the carriers falling thereon or to choose more robust constellations for these carriers.

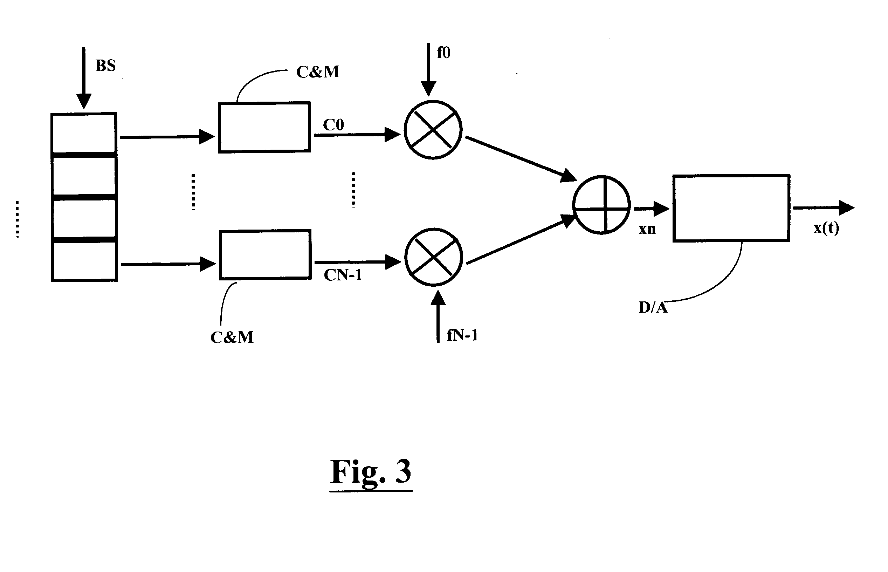

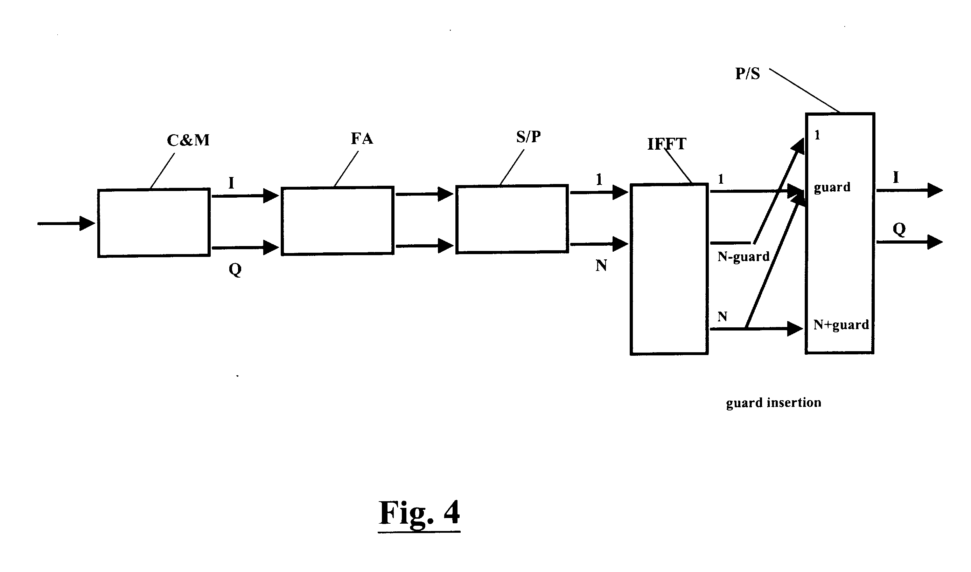

Figs. 3 and 4 respectively are a schematic representation of the OFDM signal generation and the main functional block diagrams constituting the modulator. In these figures, BS indicates a stored bit sequence to be transmitted, C&M stands for a mapping and encoding block, D/A stands for a digital-to-analogue converter that converts a signal obtained from the sum of the various carriers multiplied by the corresponding encoded information. In practice, it is stressed that the diagram of Fig. 3 depicts how the OFDM signal is hypothetically generated; in practice, however, it is generated by means of a chip (see block IFFT in Fig. 4), easily available on the market and able to do the same work in extremely reduced dimensions, at higher speed and reliability. In Fig. 4, FA indicates a frame adaptation block for data processing, IFFT stands for a signal generation block which performs an inverse fast discrete Fourier transform, S/P stands for a block performing a serial-to-parallel conversion, P/S stands for a block performing an inverse operation and GI stands for the guard insertion.

The orthogonality between the carriers is assured in transmission by the following contrivances: 1) the carriers are represented by signals of the type $sin(x)/x$ becoming null at regular intervals $\Delta f$, whereby positioned on the nullification of a carrier is the maximum of another one. It follows that at each nullification point there is one and only one maximum of another carrier; 2) the available time to perform a complete IFFT on $N$ points is exactly $T_u$, i.e. N times the elementary period $T = T_u/N$ ($N$ and $T_u$ were defined previously), it follows that the spacing between the carriers is equal to $\Delta f = 1/T_u$; 3) let "guard define a reduced set of $N$, i.e. the last "guard" values of the N produced by the IFFT, the guard insertion consists in inserting at the top of the N-value set of the IFFT a replica of the guard values obtained as said above. The thus obtained set of the $N+guard$ values is then serialized and transmitted as indicated in Fig. 4. The guard time $T_g$ is therefore: $T_g = guard *T = guard*T_u/N$ and the overall length of the OFDM symbol is $T_s = T_u + T_g$

= $T^*(N + guard) = (T_u/N)^*(N + guard)$.

The frame adapter highlighted in Fig. 4 prepares $N$ complex values to be provided to the IFFT. N is a power of two and the number of carriers transporting the information data is less than $N$. The frame adapter constructs a set of $N$ values by W orderly numbered times (frame), where it inserts service carriers between data carriers in static or dynamic position with a known law. Some of these carriers are at a different power level from the data ones, others carry information concerning the transmitter configuration. The position of all the carriers and their meaning are always known to the receiver that uses them to carry out an estimation of the channel and a subsequent frequency equalization to perform a frame synchronization, a frequency synchronization, a time synchronization, an identification of the transmission mode and of the transmitting apparatus.

Depending on the stillness of the disturbance and on its position in the spectrum, it is of course possible to assume the use of constellations of different dimension for each carrier: for instance at not too much disturbed areas a 1024 QAM can be used, at very disturbed areas a QPSK is used and at completely disturbed areas the carrier is nullified by inserting the zero value in its corresponding position before the IFFT.

The main advantage in using a multicarrier technique as described above, therefore, resides in performing a channel equalization in the frequencies and not in the time, also for delays of very distant echoes. Another advantage resides in that it is possible to transmit information over a channel affected by any disturb, both statically and dynamically, both in a deterministic and in a random way, being able to restore the transmitted information from the uncorrupted carriers or thanks to the protection mechanisms. Yet another advantage from using the OFDM technique is the possibility of utilizing the OFDMA access technique.

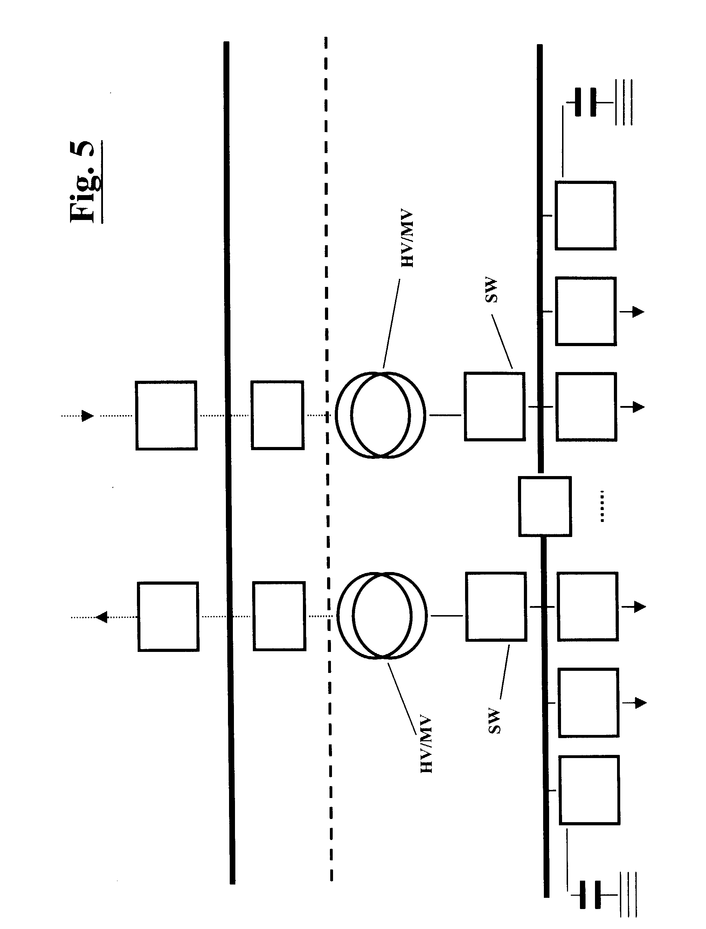

As to the choice of the service provider connection area, it is to be kept in mind that distribution networks in general comprise two voltage levels: a medium-voltage (MV) one (10-20kV) and the low-voltage (LV) one (220/380V) corresponding to which are the so-called medium-voltage and low-voltage networks, respectively. The medium-voltage distribution network is generally fed by two HV/MV transformers installed at primary substations, whose schematic diagram is illustrated in Fig. 5, which include bus bar systems, represented by thick lines in Fig. 5, which are designed to feed a number of medium-voltage lines MVL through switches SW equipped with protection and control devices. Depending on the operating transitions of the various members, the network connection status is considerably variable with time. Moreover, most of the lines coming out of a primary substation reach the bus bars of other primary substations, whereby the MV distribution network is meshed. From Fig. 5 it is also clear that each line is fed through only one switch SW connected to the bus bars of a primary substation up to the boundary points, at which points a control member, generally kept open, is provided.

Likewise, the low-voltage distribution network is fed by MV-to-LV transformers, installed at secondary substations, which feed respective low-voltage bus-bar systems connected to which are a number of low-voltage lines LVL through switches SW' provided with magneto-termal protection. Similarly to the medium-voltage network, most of the lines fed by a low-voltage bus-bar lead to LV bus-bar systems of other secondary substations. Lastly, also in this network, the connection status is variable with time.

The survey of the coupling modes for the service provider confirms the phase-to-phase mode as being more advantageous than the phase-to-ground one from the attenuation and crosstalk viewpoint and therefore the relating capacitive coupling is more effective even if it requires a more complex installation as compared with the induction one. Moreover, the capacitive coupler which implements the phase-to-phase coupling mode does not affect at all the ground directional protections.

Further considerations in order to identify a transmission architecture over these networks are the followings: a) over the MV networks the set of secondary substations connected to the same primary substation constitute "islands" which can be defined as transmissively autonomous, i.e. where the transmission activity may occur in a simultaneous and uncorrelated manner; b) over the LV networks, the set of LV customers connected to the same secondary substation constitute "sub-islands" (isles of the preceding ones) which can be defined transmissively autonomous, and c) there is the need to minimize the amount of hardware components directly connected to the network.

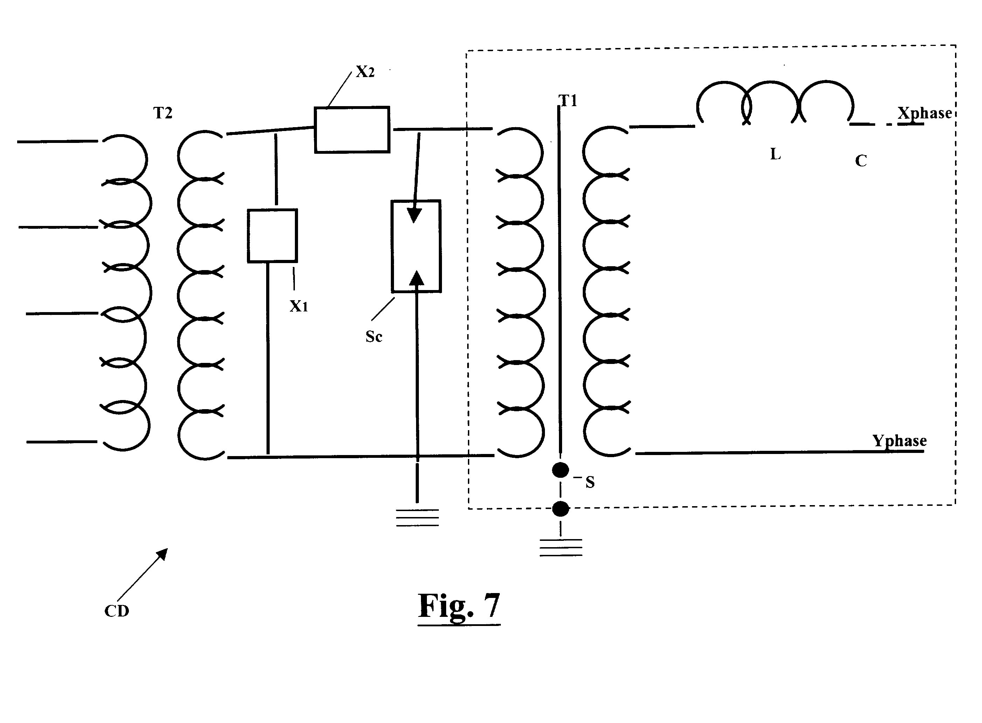

The above considerations lead to the identification of two possible access points for the service provider: 1 ) in case the transmission is over MV network, directly at the MV half-bars of the primary substation, as well as at the MV bus-bars of the MV secondary substations or at the MV/LV transformer; 2) for transmission over LV network, directly on the LV bus-bars of the secondary substations. A possible phase-to-phase and totally passive coupling device is shown in Fig. 7. In this figure, wherein the transmit-receive side is the left-hand one, the line side is the right-hand one, C denotes the capacitance of the capacitor, L represents the tuning inductance, T1 denotes the isolation transformer, $S_C$ denotes a discharger, X1 and X2 represent compensating reactances, T2 denotes an impedance translator and S represents a protection screen. Parts devoted to the pass-band definition are replaceable by devices designed to pass the band of interest.

The basic diagram of such device is adaptable for parallel connection both over MV networks and LV networks and it is received in such a way that, once loaded on a known impedance at the transmit-receiver side, it is able to match (by means of translator T2) with a line-side impedance which is about 5 to 10 times the characteristic impedance of the MV or LV line (overhead lines, cable lines, mixed lines, primary substation half-bars, etc.) at the coupling point. The physical separation between transceiver and coupling device is due to the different needs of location of the two components while observing the safety rules.

The communication mode of the customers with the centre provides that, given any frequency band BW to be used for an up-link communication, i.e. from the customer to the central station (a different band will be considered for the down-link), such communication is realized by assigning all the available time division band (time division multiplex access or TDMA) to each customer or by assigning an its own specific band resulting from a partition of the overall band BW to each customer at the same time.

The system in accordance with the present invention provides that the available overall band BW should be considered as the union of two distinct bands, BW1 for the up-link and BW2 for the down-link, then the OFDMA (orthogonal frequency division multiplex access) technique is used for the up-link and conventional OFDM or still OFDMA technique is used for the up-link. The OFDMA technique is an evolution of the FDMA (frequency division multiple access) technique integrated with the properties deriving from the OFDM technique. The different components of the OFDM multicarrier signal, i.e. the subcarriers, are generated by different sources, physically distinct and spaced apart from one another, but they are synchronized with the central receiver. Each customer transmits, with OFDM multicarrier technique, only an assigned set of subcarriers and the receiver takes care of aligning and synchronizing the incoming components from all the customers so as to maintain the orthogonality between the subcarriers and all what is necessary so that this signal can be demodulated.

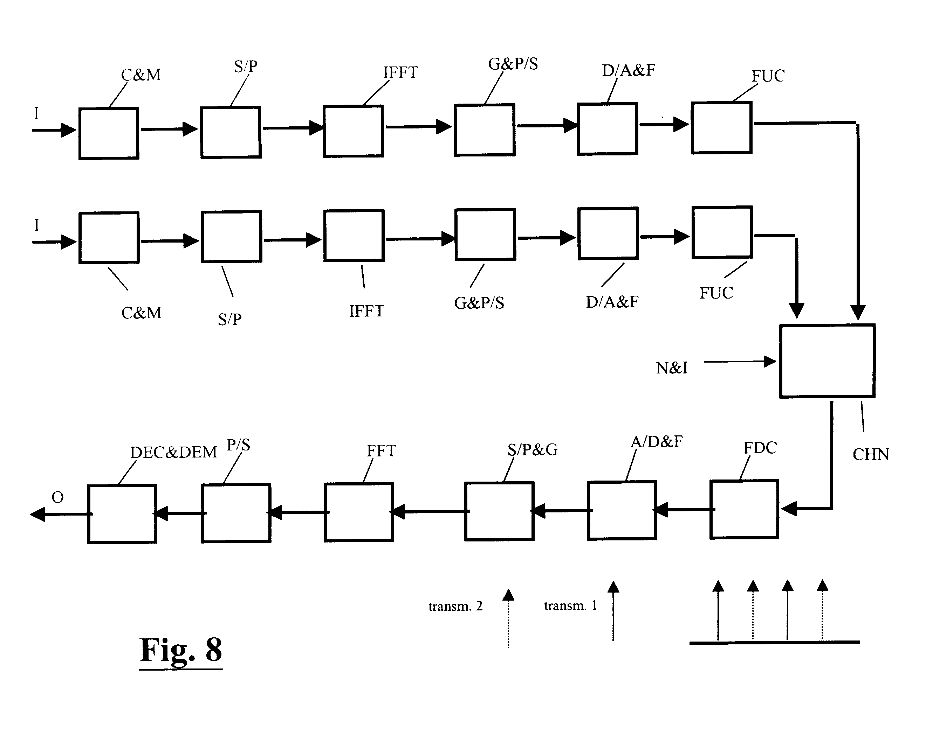

In fact, whilst conventional FDMA technique requires N different receivers for demodulating the signals sent by N customers, with the OFDMA technique it is sufficient to use only one receiver capable of carrying out a discrete Fourier transform operation over N points. Therefore, in an OFDMA system a flexibility is obtained deriving from the allocation of a variable number of subcarriers assigned to specific customers. The main limitations derive from the necessity to maintain the orthogonality between the several subcarriers arriving at the receiver grouped from different and spaced out points through a channel featuring dispersiveness and time variance characteristics. In the access diagram shown in Fig. 8 there are a series of known causes that may concur, together or separately, in having the orthogonality between the carriers to the central receiver lost. The most important are the relative frequency deviation between the subcarrier set, the loss of symbol time alignment in transmission, the loss of symbol synchronism in reception and the non-linearity of the transmitting or transport means.

In the up-link diagram of Fig. 8, the input data (I) enter a block C&M that encodes and matches the bits with the symbol of a constellation, a block S/P that converts in parallel data serially arriving thereat, a block calculating the inverse fast Fourier transform (IFFT) thereof; the output of this block is added to the guard, is converted from serial to parallel (G&P/S), converted from digital to analogue and filtered (D/A&F), frequency-converted (FUC, Freq. Up Conv.) and sent to a common channel (CHN) subjected to noise and interference (N&I), frequency reconverted (FDC, Freq. Down Conv.), passed into an analogue-to-digital converter and filtered (A/D&F), passed into a serial-to-parallel and guard block (S/P&G), a fast Fourier transform (FFT) is performed, passed into a parallel-to-serial converter P/S, into a demapping and decoding (DEC&DEM) which performs the inverse operation of associating the symbol with the bit stream and decoding the obtained data, up to the achievement of the output data (O). In the event of down-link, all customers receive the same OFDM signal but assigned to each is a precise subcarrier set which transports the required information. Depending on the number of customers and/or type and/or amount of information to be transmitted, a number of carriers will be assigned to each customer.

Easily recognizable at the bottom of Fig. 8 are the offset carriers of the transmitters 1 and 2 (which are offset according to any and convenient law).

At this point, the main advantages obtained with the present invention are evident, i.e. the freedom of dynamic allocation of the carriers according to the demands and offered services, the possibility to use a power line as an access network, the high data exchange rate; the possibility to exchange multimedia services, intelligent home, teleworking, fast internet and video on demand, etc. without the installation of suitable cables; and the possibility to rent the network to third parties for providing services.

Lastly, it will be apparent that several modifications, variations and substitutions of components by functionally equivalent ones are possible still observing the characteristics outlined above, the scope of the invention being defined only by the following claims.

## Claims

1. Method of transmitting digital signals from a central digital or digitized data source to a customer through the use of electrical power lines, characterized in that it provides the step of OFDM or OFDMA modulating the data from said digital or digitized source.

**2.** Method of receiving digital signals transmitted to a customer from a central digital or digitized data source through the use of electrical power lines, characterized in that it provides the step of demodulating the received signal by means of an OFDM demodulator in which the channel equalization is carried out through the use of carriers devoted to the purpose.

**3.** Method of transmitting digital signals from a customer to a central unit through the use of electric power lines, characterized in that it provides the step of modulating the data to be transmitted through the use of OFDMA access technique.

**4.** Method of receiving digital signals transmitted from a customer to a central unit through the use of electric power lines, characterized in that it provides the step of demodulating the received signal through an OFDM demodulator in which a channel equalization is carried out through the use of carriers devoted to the purpose, and in that the access is OFDMA whereby the received signal is time-and frequency-synchronized, and the orthogonality between the carrier sets coming from different customers is constructed, by the receiver.

**5.** Method according to any of claims 1-4, characterized in that it comprises the additional step of filtering the modulated signal or the signal to be modulated.

**6.** Method according to any of claims 1-5, characterized in that it provides the additional step of conditioning in advance the electrical power lines so as to make them independent from impedance variations.

**7.** Method according to claim 6, characterized in that the step of conditioning the electric power lines provides for separating the feed from the data exchange.

**8.** Method according to any of claims 1-7, characterized in that the transmission/reception occurs over low or medium AC voltage electric power lines using a multicarrier OFDM technique and modulation according to a fixed constellation chosen in the xQAM or xPSK family for each carrier, different carriers being able to be modulated with different constellations.

**9.** Device for transmitting digital signals from a data source through electric power line, said device comprising at least one modulator, characterized in that said modulator utilizes a multicarrier OFDM technique with or without OFDMA access with any number of carriers and with any constellation for each carrier.

**10.** Device for receiving digital signals through electric power lines, said device comprising at least one demodulator, characterized in that said at least one demodulator utilizes a multicarrier OFDM technique with any number of carriers and with any constellation for each carrier and without or with OFDMA access, in which event the receiver is able to synchronize and demodulate signals received from different customers.

**11.** Device according to claim 9 or 10, characterized in that it further comprises filter means.

**12.** Device according to any of claims 9-11, characterized in that it further comprises conditioning means able to separate the feed from the data exchange.

EP 0 975 097 A2

US

US

ML

MV/LV

US

US

US

US

**Fig. 1**

customer

LPF

HPF

CU

Comm.
Signal

**Fig. 9**

Fig. 2

**Fig. 3**

**Fig. 4**

Fig. 5

HV/MV

SW

HV/MV

SW

**Fig. 6**

**Fig. 7**

EP 0 975 097 A2

**Fig. 8**